# EUROPEAN PATENT APPLICATION

(11) **EP 4 677 979 A1**
(43) Date of publication of application: **14.01.2026**
(21) Application number: 25187842.7
(22) Date of filing: 07.07.2025
(51) Int. Cl.: A01B 59/00, B60D 1/46

(54) **TOWABLE VEHICLE CONFIGURED TO BE TOWED BY A TOWING VEHICLE**

(30) Priority: 08.07.2024 GB 202409891
(71) Applicant: AGCO International GmbH, 8212 Neuhausen am Rheinfall (CH)
(72) Inventor: UTZ, Johannes, 87616 Marktoberdorf (DE); Kranz, Tim, 87616 Marktoberdorf (DE); Wilhelm, Christoph, 87616 Marktoberdorf (DE); Weissbeck, Max, 87616 Marktoberdorf (DE)
(74) Representative: AGCO Intellectual Property Department

(57) **Abstract**

A towable vehicle (300) can be towed by a towing vehicle (100) having a rear axle (402), a front axle (304), and a towing assembly (310). The towing assembly (310) has a drawbar (312) with at least one coupling point (314, 342). The height of at least one coupling point (314, 342) of a drawbar (312) of the towable vehicle (300) can be increased by a first actuator (318a, 318b) and/or a second actuator (112a, 112b). The at least one coupling point (314, 342) can be connected with the towing vehicle (100). The height of the at least one coupling point (314, 342) can be decreased and the front axle (304) of the towable vehicle (300) can be lifted.

## Description

### FIELD

The present disclosure relates generally to a towable vehicle configured to be towed by a towing vehicle and a method of coupling the towable vehicle with the towing vehicle.

### BACKGROUND

Agricultural field operations may be performed by autonomous agricultural machines. Such an autonomous agricultural machine may be an agricultural robot as disclosed in WO 2020/239363 A1, entitled "Seeding robot", published on 3 December 2020 or WO 2018/054625 A1, entitled "Seed Planter", published on 29 March 2018. Autonomous agricultural machines may be transported by means of a trailer.

### BRIEF SUMMARY

The usage of a trailer to transport autonomous agricultural machines may not be applicable for some situations, for example in case of a breakdown of the agricultural machine during a field operation. Hence, it is an objective to provide a transport possibility for an autonomous agricultural machine to enable a transportation of an autonomous agricultural machine being out of order or a transportation of an autonomous agricultural machine on public roads, e. g. between a farm and the agricultural field, without usage of a trailer.

According to an aspect of the invention there is provided a towable vehicle configured to be towed by a towing vehicle. The towable vehicle comprises a rear axle, a front axle, a towing assembly configured for connecting the towing vehicle and for lifting the front axle. The towing assembly comprises a drawbar with at least one coupling point. The height of the at least one coupling point is adjustable by a first actuator and/or a second actuator.

The towable vehicle may be an autonomous agricultural machine, for example in terms of an agricultural robot or any other agricultural machine configured for autonomous field operations such as an autonomous tractor. The towable vehicle may comprise a control unit to carry out the autonomous control of the towable vehicle. The towable vehicle may comprise an implement for treating the agricultural field such as a seeding unit, a spraying unit, a weeding unit, a mowing unit, a plough, a header, etc. The towing vehicle may be any on-road or off-road vehicle, such as for example an agricultural vehicle like a tractor or a pickup truck. The towing vehicle may be operator controlled and may comprise a corresponding human machine interface (HMI) such as a steering wheel or pedals for accelerating or braking. The rear and/or the front axle of the towable vehicle may transfer a tractive force to ground engaging means, such as wheels or tracks, connected with the axles for driving the towable vehicle on the agricultural field. The front axle may be lifted by the towing assembly to lift the ground engaging means connected with the front axle from the ground. I. e., the wheel(s) or track(s) connected with the front axle may get out of contact with the ground. The at least one coupling point of the drawbar may be moveable in a vertical direction so that the height of the at least one coupling point may be raised or lowered. The height of the coupling point may be adjusted by a rotational movement of the drawbar. Due to a rotational adjustment of the drawbar, the front axle of the towable vehicle may be lifted. For example, the front axle may be lifted if the drawbar is rotated in a direction to lower the height of the coupling point and vice versa. The first and/or second actuator for adjusting the height of the coupling point may be a hydraulic cylinder or an electro-mechanical drive unit, for example. First actuator may be controlled by the control unit. The coupling point may be a ball head coupling (e. g. a K80 ball-type coupling device) or a tow eye. The towing vehicle may have a complementary coupling being connectable with the coupling point of the drawbar. Alternatively, the towing assembly may be configured to be connected with a lower link connection of a hitch of the towing vehicle and comprise two coupling points. After connecting the towable vehicle with the towing vehicle, the towable vehicle may be drawn by the towing vehicle. Hence, the towable vehicle can be transported by the towing vehicle when the towable vehicle is out of order or needs to be moved on public roads. Since the front axle of the towable vehicle may be lifted only, the ground engaging means of the rear axle of the towable vehicle may be still in contact with the ground while the towable vehicle is drawn by the towing vehicle.

The drawbar may be pivotably connected with the front axle of the towable vehicle.

The drawbar may be pivotable about a lateral axis being perpendicular to a vertical direction of the towable vehicle so that the coupling point of the drawbar can be moved in the vertical direction for height adjustment. The drawbar may be pivoted in a first direction to move the coupling point of the drawbar from a higher position to a lower position. When the coupling point has been lowered enough, the coupling point gets connected with the towing vehicle. In this way, a K80 ball-type coupling device may be connected with a complementary coupling of the towing vehicle, for example. When the coupling point is connected with the towing vehicle, the drawbar may be pivoted further in the first direction. Then, the coupling point of the drawbar may be supported by the complementary coupling of the towing vehicle so that the front axle of the towable vehicle may be pushed in an upward direction by the drawbar pivoting further in the first direction. Hence, the front axle may be lifted and the ground engaging means connected with the front axle may get out of contact with the ground.

The towing assembly may comprise the first actuator. The first actuator may be connected with the drawbar.

The drawbar may comprise a first end and a second end. At the first end of the drawbar, the first actuator may be connected. At the second end of the drawbar, the at least one coupling point may be attached. The lateral axis about which the drawbar may be pivotable may be arranged between the first and the second end of the drawbar. Hence, the first actuator may adjust the height of the first end of the drawbar to pivot the drawbar about the lateral axis. The drawbar may be moved in the first direction to move the coupling point of the drawbar from a higher position to a lower position when the first actuator moves the first end of the drawbar from a lower position to a higher position. Analogously, the drawbar may be moved in a second direction to move the coupling point of the drawbar from a lower position to a higher position when the first actuator moves the first end of the drawbar from a higher position to a lower position. The first actuator may be controlled by the control unit accordingly.

The first actuator may be configured to be powered by a power source of the towing vehicle.

The towing vehicle may provide a power source such as a hydraulic pump or an electric battery and an interface to get the first actuator connected with the power source. The first actuator may comprise a cable or a hydraulic line for connecting the first actuator with the power source of the towing vehicle and to transfer a hydraulic fluid or electric energy to drive the first actuator. Hence, the first actuator may be supplied with energy by the towing vehicle so that a separate power source installed in the towable vehicle may be omitted.

The at least one coupling point may be extractable.

The at least one coupling point may be movable along a longitudinal axis of the drawbar. The coupling point may be extracted to adjust the length of the drawbar. For example, the coupling point may be moved out for providing an easier connection of the coupling point with the towing vehicle and may be moved in (retracted) for providing a more compact configuration of the drawbar when the towable vehicle is operating autonomously in the agricultural field. The coupling point may be retractable/extractable by means of an actuator. The actuator may be controlled by the control unit. Alternatively, the coupling point may be manually retractable/extractable.

The front axle may be a swing axle. The towable vehicle may comprise a swing locking mechanism. The swing locking mechanism may be configured to lock a swing movement of the front axle.

The front axle may be swingable about a longitudinal axis of the towable vehicle. Hence, the driving stability of the towable vehicle may be improved when the towable vehicle moves on rough terrain such as an agricultural field. But a swinging front axle may decrease the stability of the towing vehicle when the towable vehicle is drawn by the towing vehicle and connected by a coupling point providing an additional rotational degree of freedom about the longitudinal axis such as a K80 ball-type coupling device or a tow eye, for example. Hence, the swing locking mechanism may be activated to lock a swing movement of the front axle when the towable vehicle is drawn by the towing vehicle. When activated, the swing locking mechanism may block one of the two rotational degrees of freedom about the longitudinal axis to increase stability of the towing vehicle when drawn. I. e., the activated swing locking mechanism reduces the number of rotational degrees of freedom about the longitudinal axis from two to one. In case of a lower link connection of a hitch, there may be only one rotational degree of freedom about the longitudinal axis so that the swing locking mechanism could be left in a deactivated state. Optionally, the rear axle may be a swing axle, too.

The swing locking mechanism may comprise a third actuator for locking or unlocking a swing movement of the front axle.

The third actuator may be configured to switch the swing locking mechanism into the activated or deactivated state. The third actuator may be a hydraulic or an electromechanical actuator. The third actuator may activate the swing locking mechanism automatically when the towable vehicle has been connected with the towing vehicle. Hence, the swing locking mechanism may be activated without additional manual interaction to lock a swing movement of the front axle. The third actuator may be controlled by the control unit.

The towable vehicle may comprise wheels connected with the rear axle, a drive for transferring a drive torque to the wheels, and an interrupting mechanism to interrupt a transmission of the drive torque to the wheels.

The towable vehicle may be driven by the drive for traversing the agricultural field autonomously. The drive may be an electric motor, an internal combustion engine or a hybrid solution, for example. The interrupting mechanism may be arranged between the drive and the wheels and may be a clutch, for example. When the towable vehicle is towed by the towing vehicle, a tractive force may induce a torque on the wheels having contact with the ground, e. g. the rear wheels. But the torque may damage the drive or any other components connected with the drive. Hence, the interrupting mechanism may interrupt the transmission of the drive torque when the towable vehicle is drawn by the towing vehicle to avoid any damage. The interrupting mechanism may interrupt the transmission of the drive torque automatically when the towable vehicle has been connected with the towing vehicle. The interrupting mechanism may be controlled by the control unit.

The towable vehicle may comprise steerable wheels connected with the rear axle, and a steering locking mechanism for locking a steering movement of the steerable wheels.

The steerable wheels may be connected with an automatic steering system for changing the driving direction of the towable vehicle autonomously when driving through the agricultural field. The steerable wheels may be turned by the steering system from a neutral position to the left or to the right. The steering locking mechanism may lock the steering system to fix the steering angle of the wheels. For example, the steering angle of the steerable wheels may be locked after the wheels have been turned into the neutral position for a straight forward driving direction. Then, the towable vehicle may follow the path of the towing vehicle when drawn by the towing vehicle. Hence, stability of vehicle dynamics of the towable vehicle may be improved when the towable vehicle is drawn. Otherwise, the towable vehicle may move into a direction different to the driving direction of the towing vehicle since the steerable wheels may still be in contact with the ground when the towable vehicle is drawn. The steering locking mechanism may lock a steering movement of the steerable wheels automatically when the towable vehicle has been connected with the towing vehicle. Optionally, the towable vehicle may comprise steerable wheels connected with the front axle. The automatic steering system as well as the steering locking mechanism for the front and/or rear axle may be controlled by the control unit.

The towable vehicle may comprise a brake for braking a wheel of the rear axle and a brake release mechanism for disabling a brake actuation of the brake.

The brake may decelerate and stop the towable vehicle automatically when moving autonomously in the agricultural field. When the towable vehicle is drawn by the towing vehicle with braked wheels, the wheels, the brake and/or other components may be damaged. The towable vehicle may also prevent the towing vehicle to be drawn. Hence, the brake release mechanism may enable a free rotational movement of the wheels of the rear axle when the towable vehicle is drawn. The brake release mechanism may disable a brake actuation of the brake automatically when the towable vehicle has been connected with the towing vehicle. Alternatively, the brake release mechanism may be manually operable, e. g. by means of a screw accessible from the outside of the towable vehicle. The brakes and/or the brake release mechanism may be controlled by the control unit.

The brake may be applicable for a service brake function and a parking brake function. The brake release mechanism may be configured for disabling the brake actuation of the brake when the brake is applied for the parking brake function and enabling an actuation of the brake when the brake is applied for the service brake function.

The control unit may control the brake for a service brake function or a parking brake function. When the towable vehicle is towed by the towing vehicle, a tractive force may induce a torque on the wheels having contact with the ground, e. g. the rear wheels. But the torque may damage the wheels or the brake applied for the parking brake function of the wheels. Hence, a damage can be avoided if the brake release mechanism cancels the parking brake function. But in case of service braking, e. g. if the towing vehicle needs to be decelerated, the brake release mechanism may keep the brake of the towable vehicle still applicable for service braking.

The towable vehicle may comprise a sensor for detecting a lifting of the front axle.

When the towable vehicle tows the towable vehicle, the front axle of the towable vehicle may be lifted, e. g. by the towing assembly, to lift the wheels connected with the front axle from the ground. Hence, a lifted front axle may be an indicator that the towable vehicle is towed by the towing vehicle. A signal of the sensor for detecting a lifting of the front axle can be used to determine whether the towable vehicle is towed by the towing vehicle (or not). The sensor for detecting a lifting of the front axle may be an inclination sensor, an acceleration sensor or any other type of sensor. For example, the sensor may be configured to detect a rebound of spring-mounted wheels of the front axle due to the lifting of the front axle. The sensor signal may be sent to the control unit. In response to a detection of a lifted front axle, the control unit may trigger and control automatically the brakes, the brake release mechanism, the interrupting mechanism, the steering system, the steering locking mechanism and/or the swing locking mechanism.

A further aspect provides a vehicle combination of a towable vehicle as described above and a towing vehicle. The towing vehicle comprises at least one height adjustable arm. The second actuator may be attached to the at least one height adjustable arm. The at least one coupling point may be attached to the at least one height adjustable arm.

The towing vehicle may be equipped with a hitch, e. g. at a back side of the towing vehicle, to carry and lift an agricultural implement. The height adjustable arm may be part of the hitch. So, the hitch of the towing vehicle may be used to tow the towable vehicle.

Another aspect includes a method of coupling a towable vehicle with a towing vehicle. The method comprises a step or steps for positioning of the towing vehicle in respect of the towable vehicle, increasing the height of at least one coupling point of a drawbar of the towable vehicle, connecting the at least one coupling point with the towing vehicle, decreasing the height of the at least one coupling point, and lifting a front axle of the towable vehicle.

The towing vehicle may be controlled by an operator to position the towing vehicle in respect of the towable vehicle. The towable vehicle and the towing vehicle may be positioned to each other so that the at least one coupling point of the drawbar can be connected with a complementary coupling of the towing vehicle. The height of the at least one coupling point may be increased so that the complementary coupling of the towing vehicle can be moved under the coupling point. The height of the at least one coupling point may be decreased again to connect the coupling point with the complementary coupling of the towing vehicle. When the coupling point has been connected with the complementary coupling of the towing vehicle, the front axle of the towable vehicle may be lifted to lift up the ground engaging means, e. g. the wheels, connected with the front axle from the ground.

The method may comprise at least one of the following steps: Extracting the at least one coupling point, activating a swing locking mechanism to lock a swing movement of the front axle of the towable vehicle, turning steerable wheels of a rear axle of the towable vehicle into a neutral position and activating a steering locking mechanism for locking a steering movement of the steerable wheels, activating an interrupting mechanism to interrupt a transmission of drive torque to the wheels of the rear axle of the towable vehicle and/or releasing a brake configured for braking a wheel of the rear axle of the towable vehicle.

The at least one coupling point may be extracted from the drawbar to extend the length of the drawbar. The activation of the swing locking mechanism may improve the driving stability of the towable vehicle when the towable vehicle moves on rough terrain such as an agricultural field. The activation of the steering locking mechanism may improve the stability of vehicle dynamics of the towable vehicle when the towable vehicle is drawn since unintended steering movements can be prevented. The activation of the interrupting mechanism and/or releasing of the brake may avoid any damage to the wheels, brake, drive or any other components connected with the wheels due to tractive forces induced on the wheels having contact with the ground when the towable vehicle is drawn.

The method may comprise a step for connecting a power source of the towing vehicle with an actuator for adjusting the height of the at least one coupling point.

The power source may be a battery or a hydraulic pump to supply the actuator with energy. The actuator may be connected with the power source by a cable to transmit electric energy or a hydraulic line to transmit a fluid. If the actuator is used only for connecting the towable vehicle with the towing vehicle, the power source may be installed in the towing vehicle. I. e., the power source may be part of the towing vehicle and the actuator may be part of the towable vehicle.

The method may comprise a step for sensing a lifting of a front axle of the towable vehicle.

The front axle may be lifted to lift the ground engaging means from the ground when the towing vehicle draws the towable vehicle. A sensor may detect that the front axle is lifted and generate a corresponding signal. The signal may be used for triggering automatically the brakes, the brake release mechanism, the interrupting mechanism, the steering locking mechanism, the swing locking mechanism and/or enabling an activation thereof.

As disclosed above, the control unit is configured to execute different actions. Each action may be implemented as one or more (additional) method steps of the method executable by the control unit. Hence, each action for which the control unit is configured to execute may be defined as a method step.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

Several aspects of the invention will now be described, by way of example only, with reference to the accompanying drawings, in which:
FIG. 1 illustrates a towing vehicle and a towable vehicle disconnected from each other.
FIG. 2 illustrates a simplified view of a control unit.
FIG. 3A illustrates a frontal view of the towable vehicle.
FIG. 3B illustrates a frontal view of the towable vehicle.
FIG. 4 illustrates a hydraulic system schematic.
FIG. 5A illustrates the towable vehicle connected with the towing vehicle from a perspective view.
FIG. 5B illustrates the towable vehicle connected with the towing vehicle from a perspective top view.
FIG. 5C illustrates the towable vehicle connected with the towing vehicle from a perspective top view.
FIG. 6 illustrates the towable vehicle connected with the towing vehicle from a perspective side view.
FIG. 7 illustrates a flow chart of a method executable by the control unit of FIG. 2.

### DETAILED DESCRIPTION

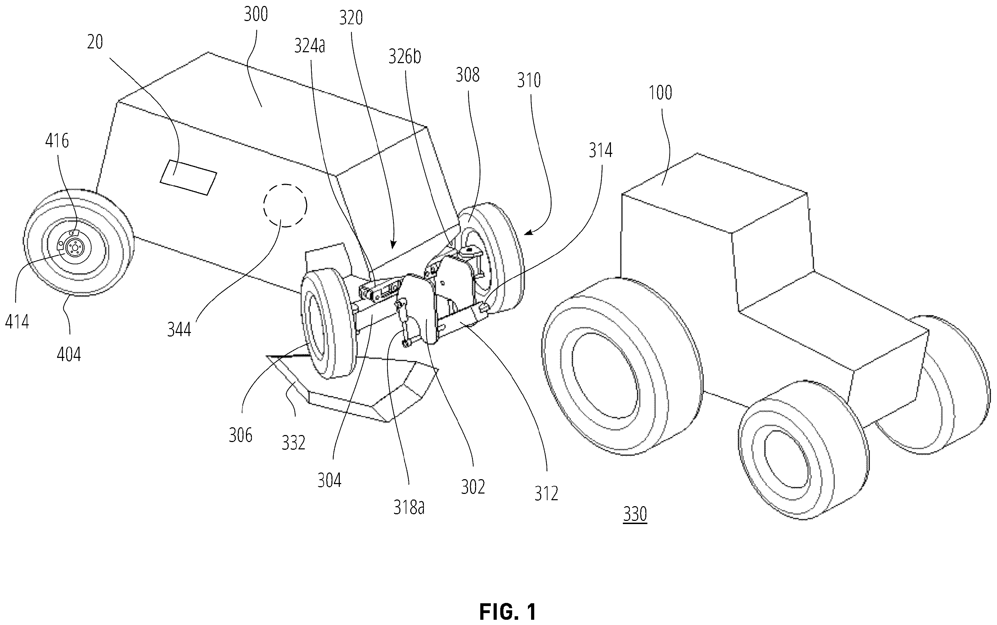

FIG. 1 shows a towing vehicle 100 and a towable vehicle 300 configured to be towed by the towing vehicle 100. Both vehicles are located on a ground 330, for example of an agricultural field. The towing vehicle 100 may be of any type. Here, the towing vehicle 100 is exemplarily shown as an agricultural machine such as a tractor. The towing vehicle 100 may comprise a human machine interface (HMI) such as a steering wheel or pedals for accelerating or braking which may be controlled by an operator.

The towable vehicle 300 may be an autonomous agricultural machine such as an agricultural robot or any other agricultural machine configured for autonomous field operations such as an autonomous tractor. The towable vehicle 300 may comprise an implement for treating an agricultural field such as a seeding unit, a spraying unit, a weeding unit, a mowing unit, a plough, a header, etc. The towable vehicle 300 comprises a control unit 20 configured to execute all functions required for autonomous control of the towable vehicle 300, including but not limited to acceleration, braking and steering of the towable vehicle 300 and controlling of the implement.

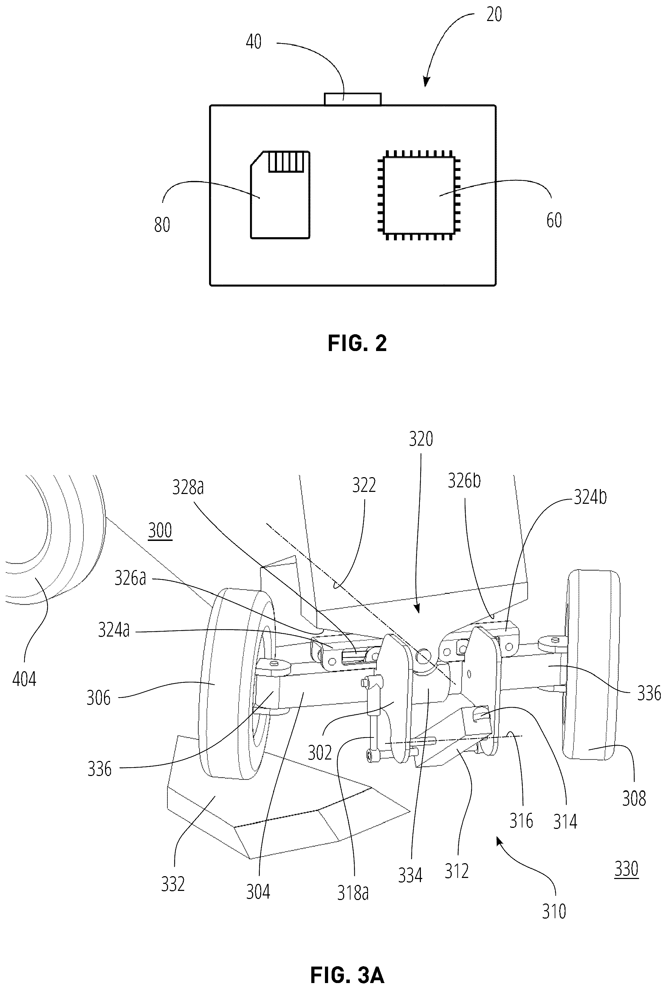

FIG. 2 shows the control unit 20 comprising an I/O interface 40, a controller 60 and a memory 80. The I/O interface 40, the controller 60 and the memory 80 may be attached to a printed circuit board (PCB). The control unit 20 may receive and send signals or data via the I/O interface 40. For example, the control unit 20 may receive sensor signals from any one of the sensors of the towable vehicle 300 and/or the towing vehicle 100 and may send control signals to any one of the actuators of the towable vehicle 300 and/or the towing vehicle 100 for controlling thereof. The I/O interface 40 may be a wireless interface or a connector. The controller 60 may store the data or signals received by the control unit 20 in the memory 80. The memory 80 may contain additional data or executable computer program products, for example in terms of a computer-implemented method, that may be retrieved, processed or executed by the controller 60. Data or signals resulting from the processing of data or signals or from the execution of a computer program product may be stored to the memory 80 or sent to the I/O interface 40 by the controller 60. Regardless of FIG. 2 exemplarily illustrating the control unit 20 as a standalone control unit, the control unit 20 may represent a network of multiple control units distributed within the vehicle combination.

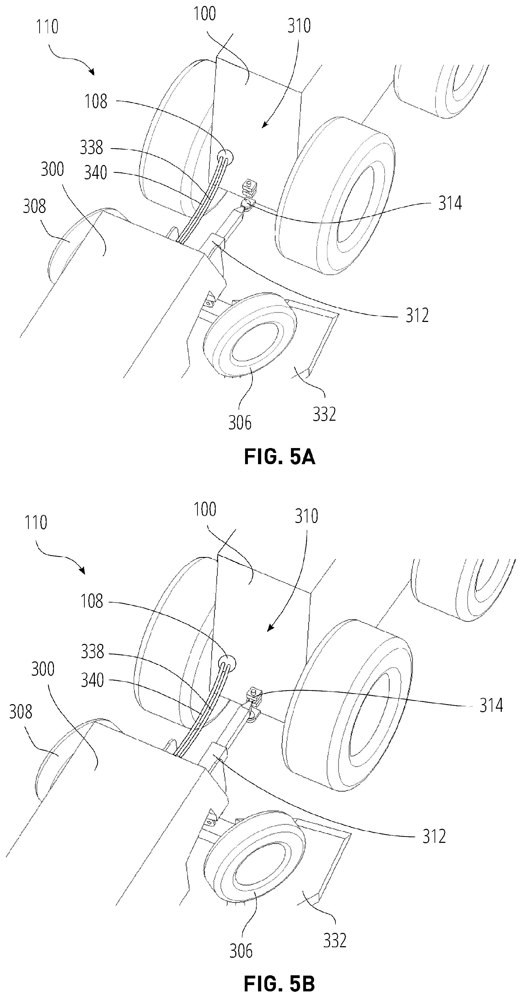

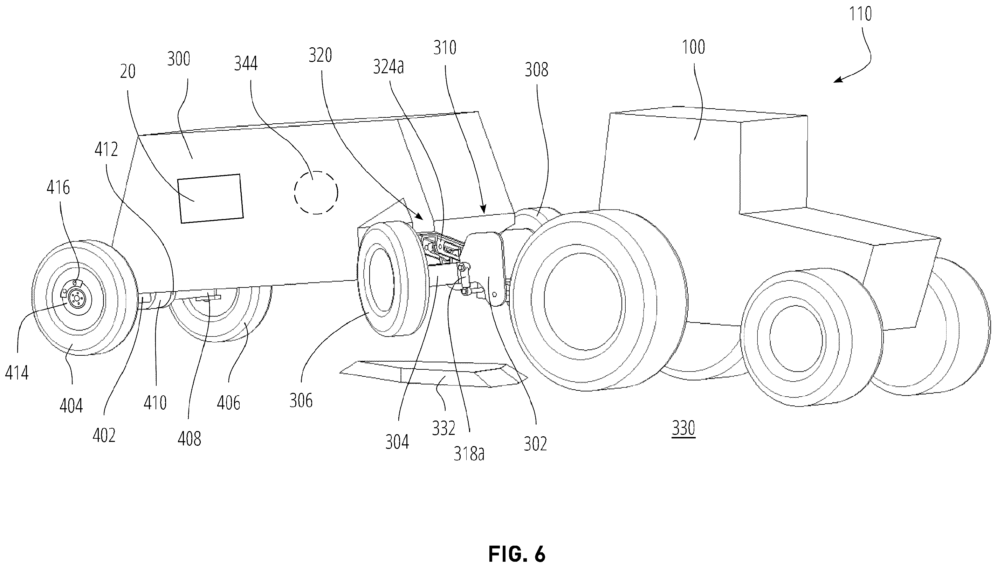

The towable vehicle 300 comprises a towing assembly 310 including the drawbar 312 with the at least one coupling point 314, 342 (see FIG. 1, FIG. 5A to FIG. 5C) to connect the towable vehicle 300 with the towing vehicle 100. The towing assembly 310 is attached to a front axle 304 of the towable vehicle 300. When both vehicles are connected with each other, a vehicle combination 110 comprising the towable vehicle 300 and the towing vehicle 100 has been established as exemplarily shown in FIG. 6. Then, the towable vehicle 300 can be drawn by the towing vehicle 100. In this way, the towable vehicle 300 can be transported by the towing vehicle 100 when the towable vehicle 300 is out of order or needs to be moved on public roads where autonomous driving may not allowed, for example.

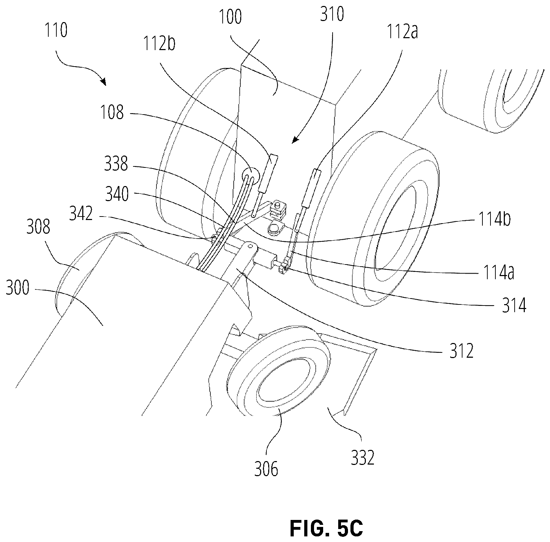

The at least one coupling point can be of different type. Irrespectively of the type of the at least one coupling point 314, 342, the towing vehicle 100 has a complementary coupling being connectable with the at least one coupling point 314, 342 of the drawbar 312. For example, the coupling point 314 is designed as a ball head coupling (e. g. a K80 ball-type coupling device) as exemplarily shown in FIG. 5A or a tow eye as exemplarily shown in FIG. 5B. Alternatively, the drawbar 312 comprises a coupling point 314 and an additional coupling point 342 for connecting the towable vehicle 300 with a hitch of the towing vehicle 100 as exemplarily shown in FIG. 5C.

The at least one coupling point 314, 342 is extractable along a longitudinal axis of the drawbar 312 and can be moved out to extend the length of the drawbar 312 or moved in (retracted) to shorten the length of the drawbar 312 again. The at least one coupling point 314, 342 may be manually retractable/extractable or by means of an actuator. In case of an actuator, the actuator may be controlled by the control unit 20.

The towable vehicle 300 comprises a rear axle 402 (see FIG. 6) with ground engaging means in terms of wheels 404 and 406 (see FIG. 6) and the front axle 304 with ground engaging means in terms of wheels 306 and 308. Wheel 404 can be braked by a brake 414. The brake 414 is applicable for a service brake function to decelerate the towing vehicle 100 when driving and a parking brake function to hold the towable vehicle 300 at standstill. Service brake function and parking brake function may be controlled automatically by the control unit 20. A brake release mechanism 416 integrated in the brake 414 may be activated to release the brake 414 when the parking brake function is active. I. e., the brake release mechanism 416 enables a free rotational movement of the wheel 404, for example when the towable vehicle 300 is towed by the towing vehicle 100. But the activation of the brake release mechanism 416 may not affect the service brake function of the brake 414 so that an application of the brake 414 for service braking is still possible. Analogously to wheel 404, the other wheel 406 of the rear axle 402 can be braked by a brake which is also releasable by a brake release mechanism.

The brake release mechanism 416 may comprise a screw manually accessible from the outside of the towable vehicle 300. So, an operator can activate the brake release mechanism 416 with a screw driver before towing the towable vehicle 300 with the towing vehicle 100. Alternatively, the brake release mechanism may be automatically activated by the control unit 20 when the towable vehicle 300 has been connected with the towing vehicle 100.

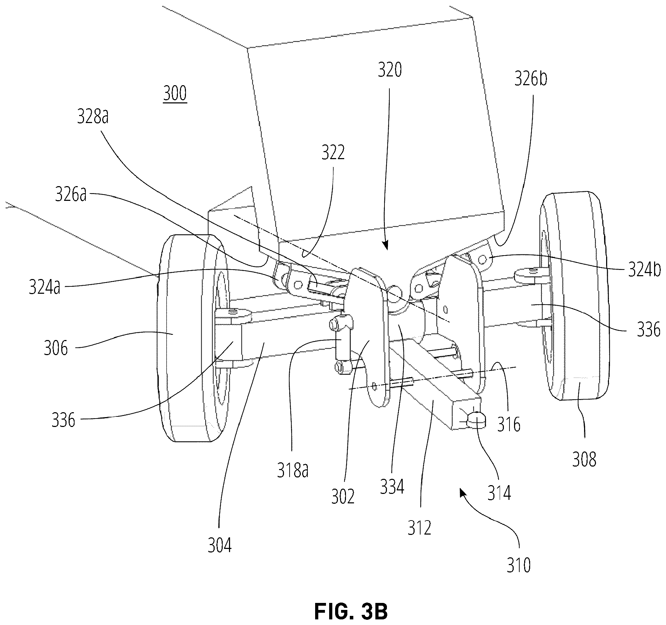

As can also be seen in FIG. 3A, FIG. 3B and FIG. 6, the front axle 304 comprises a drive 334 to provide drive torque the wheels 306 and 308 of the front axle 304 and the rear axle 402 comprises a drive 410 to provide drive torque to the wheels 404 and 406 of the rear axle 402. The drives 334 and 410 may be of any type as for example an electric motor. The drives 334 and 410 are connected with the control unit 20 and can be automatically controlled by the control unit 20 to adjust the rotational speed of each wheel 306, 308, 404 and 406 of the towable vehicle 300. If the ground engaging means are designed as tracks instead of wheels, the drives 334 and 410 would drive the tracks accordingly.

As can be seen in FIG. 6, an interrupting mechanism 412 is arranged between the drive 410 and the wheels 404, 406 of the rear axle 402. The interrupting mechanism 412 is configured to interrupt a transmission of the drive torque to the wheels 404, 406 of the rear axle 402. The interrupting mechanism 412 may be a clutch, for example. The interrupting mechanism 412 is controllable by the control unit 20. Before the towable vehicle 300 may be drawn by the towing vehicle 100, the control unit 20 may control the interrupting mechanism 412 to interrupt a transmission of a torque between the drive 410 and the wheels 404, 406 of the rear axle 402. Hence, the wheels 404, 406 can freely roll over the ground 330 when the towable vehicle 300 is drawn by the towing vehicle 100. No torque induced by a tractive force of the wheels 404, 406 having contact with the ground 330 while the towable vehicle 300 is drawn is transmitted to the drive 410 (or any other component connected with the drive 410). So, the drive 410 (or any other components connected with the drive 410) can be protected by the interrupting mechanism 412 from any damage caused by tractive forces of the rolling wheels 404, 406 when the towable vehicle 300 is drawn.

The wheels 306 and 308 of the front axle 304 and the wheels 404 and 406 of the rear axle 402 are steerable so that the towable vehicle 300 can change its driving direction when driving autonomously. A steering actuator is integrated in the front axle 304 to automatically control the steering angle of the wheels 306 and 308 of the front axle 304. Another steering actuator is integrated in the rear axle 402 to automatically control the steering angle of the wheels 404 and 406 of the rear axle 402. The steering actuators may turn the wheels 306, 308, 404, 406 from a neutral position for driving in a straight forward direction to the left or to the right. Both, the steering actuator of the front axle and the steering actuator of the rear axle can be automatically controlled by the control unit 20. For example, the control unit 20 may control the steering actuators so that the towable vehicle 300 follows a predefined path in the agricultural field. Moreover, the control unit 20 may receive radio signals from a manual remote control to control the steering angles of the wheels 306, 308, 404, 406.

In addition, a steering locking mechanism 336 is integrated in the front axle 304 to lock the steering angle of the wheels 306, 308 (see FIG. 3A, FIG. 3B) and a steering locking mechanism 408 is integrated in the rear axle 402 to lock the steering angle of the wheels 404, 406 (see FIG. 6). Before the towable vehicle 300 may be drawn by the towing vehicle 100, the control unit 20 may control the steering actuators to turn the wheels 306, 308, 404, 406 into the neutral position for a straight forward driving direction. Then, the control unit 20 may activate the steering locking mechanism 336 of the front axle 304 and the steering locking mechanism 408 of the rear axle 402 to lock the steering angles of wheels 306, 308, 404, 406 in the neutral position so that the steering angles of the wheels 306, 308, 404, 406 cannot be changed by the steering actuators as long as the steering locking mechanisms 336 and 408 lock the corresponding steering angles.

Both, the front axle 304 and the rear axle 402 are designed as a swing axle enabling a swing movement of the corresponding axle about a longitudinal axis 322 of the towable vehicle 300. For example, when the towable vehicle 300 moves on a rough ground 330 such as an agricultural field, a wheel as for example wheel 306 may be raised when rolling over an unevenness 332 as exemplarily illustrated in FIG. 3A. But the unevenness 332 can be counterbalanced by a swing movement of the front axle 304 so that the towable vehicle 300 will not be tilted (to a side direction). Hence, the driving stability of the towable vehicle 300 is improved when moving on rough ground 330.

When the towable vehicle 300 is connected with the towing vehicle 100 by a drawbar 312 having two coupling points 314, 342 as exemplarily shown in FIG. 5C, the drawbar 312 is abutted against a rotational movement about a longitudinal axis of the drawbar 312. Consequently, the drawbar 312 blocks a swing movement of the front axle 304 about the longitudinal axis 322. But in case of another type of coupling point such as a ball type coupling (K80) as shown in FIG. 5A, an additional rotational degree of freedom about the longitudinal axis is provided by the coupling point enabling swing movements of the front axle 304 which may decrease the stability of the towing vehicle 100 when the towable vehicle 300 is drawn by the towing vehicle 100. Hence, the towable vehicle 300 comprises a swing locking mechanism 320 to lock swing movements of the front axle 304 as can be seen in FIG. 1, FIG. 3A and FIG. 3B. The swing locking mechanism 320 comprises a right locking element 324a and a left locking element 324b moveable in an open position as shown in FIG. 3A for free swinging of the front axle 304 and in a locked position as shown in FIG. 3B for locking any swing movements of the front axle 304. The right locking element 324a can be moved by an actuator 328a, the left locking element 324b can be moved by an actuator 328b. Both, actuator 328a and 328b can be controlled by the control unit 20 to control the swing locking mechanism 320 to lock or unlock the front axle 304. When the swing locking mechanism 320 is activated, the actuator 328a presses the right locking element 324a against an abutment 326a of the towable vehicle 300. Simultaneously, the actuator 328b presses the left locking element 324b against an abutment 326b of the towable vehicle 300 as can be seen in FIG. 3B. I. e., the front axle 304 gets jammed against a swing movement about the longitudinal axis 322. When the swing locking mechanism 320 is deactivated, the actuators 328a, 328b move the locking elements 324a, 324b away from their corresponding abutments 326a, 326b so that a gap between the locking elements 324a, 324b and their corresponding abutments 326a, 326b is present as shown in FIG. 3A. Since an abutting of the front axle 304 against a swing movement is not possible in the deactivated state of the swing locking mechanism 320, the front axle 304 may swing freely about the longitudinal axis 322 again. Analogously to the front axle 304, the rear axle 402 may also be equipped with a swing locking mechanism.

In addition to the drawbar 312 with the at least one coupling point 314, 342, the towing assembly 310 of the towable vehicle 300 comprises also a frame 302, an actuator 318a and an actuator 318b. The frame 302 of the towing assembly 310 is attached to the front axle 304 of the towable vehicle 300. The drawbar 312 is rotatably connected with the frame 302 for rotating about a lateral axis 316. The lateral axis 316 is perpendicular to a vertical direction of the towable vehicle 300. Due to the rotational movement of the drawbar 312, the at least one coupling point 314, 342 can be moved in a vertical direction to adjust the height of the at least one coupling point 314, 342 between an upper position as exemplarily shown in FIG. 3A and a lower position as exemplarily shown in FIG. 3B. The actuators 318a and 318b are connected with the frame 302 and the drawbar 312 so that the actuators 318a and 318b are configured to rotate the drawbar 312 about the lateral axis 316. For example, as also illustrated in FIG. 3A and FIG. 3B, the at least one coupling point 314, 342 is attached to one end of the drawbar 312, the actuators 318a and 318b are attached to the opposite end of the drawbar 312 and the lateral axis 316 is arranged between the one and the opposite end of the drawbar 312. Thus, the at least one coupling point 314, 342 can be raised if the actuators 318a and 318b lower the opposite end of the drawbar 312 and vice versa.

The actuators 318a and 318b are controlled by the control unit 20 so that the height adjustment of the at least one coupling point 314, 342 is controllable by the control unit 20. For example, the control unit 20 controls the actuators 318a and 318b to raise the at least one coupling point 314, 342 so that the complementary coupling of the towing vehicle 100 can be moved below the at least one coupling point 314, 342. Then, the control unit 20 may control the actuators 318a and 318b to raise the opposite end of the drawbar 312 to lower the at least one coupling point 314, 342 until a mechanical connection between the at least one coupling point 314, 342 of the drawbar 312 and the complementary coupling of the towing vehicle 100 has been established. Then, the control unit 20 can control the actuators 318a and 318b to continue raising the opposite end of the drawbar 312. As a consequence, the opposite end of the drawbar 312 pushes the front axle 304 of the towable vehicle 300 in an upward direction while the at least one coupling point 314, 342 is abutted by the complementary coupling of the towing vehicle 100. Thus, the drawbar 312 of the towing assembly 310 lifts the front axle 304 of the towable vehicle 300 and the wheels 306 and 308 of the front axle 304 get out of contract with the ground 330 as shown in FIG. 6. Since the front axle 304 of the towable vehicle 300 is lifted only, the ground engaging means in terms of the wheels 404, 406 of the rear axle 402 of the towable vehicle 300 are still in contact with the ground 330 while the towable vehicle 300 is drawn by the towing vehicle 100.

In response to the lifting of the front axle 304, the towable vehicle 300 will be inclined. A sensor 344, such as an inclination sensor or an acceleration sensor, is integrated in the towable vehicle 300 and detects the inclination. Alternatively, the sensor may be configured to detect a rebound of spring-mounted wheels 306 and 308 of the front axle 304 due to the lifting of the front axle 304. Anyway, the sensor 344 detects the lifting of the front axle 304 and sends a corresponding signal to the control unit 20. Based on the sensor signal, the control unit 20 may determine the height of the front axle 304 and may control the actuators 318a and 318b to continue raising the opposite end of the drawbar 312 until the front axle 304 has been lifted enough so that the towable vehicle 300 is ready to be drawn by the towing vehicle 100. I. e., the sensor signal can also be used as an indicator whether the towable vehicle 300 is towed by the towing vehicle 100 (or not). In response to a detection of a lifted front axle 304, the control unit 20 may trigger and control automatically the brakes (e. g. brake 414), the brake release mechanism 416, the interrupting mechanism 412, the steering system, the steering locking mechanisms 336, 408 and/or the swing locking mechanism 320.

If the coupling points 314 342 of the drawbar 312 are connected with a hitch of the towing vehicle 100 as shown in FIG. 5C, the height of the coupling points 314, 342 are adjustable by at least one actuator 112a, 112b of the towing vehicle 100. The at least one actuator 112a, 112b is part of the hitch comprising height adjustable arms 114a and 114b arranged at a rear side of the towing vehicle 100. The at least one actuator 112a, 112b can raise and lower the arms 114a and 114b so that the height of the coupling points 314, 342 connected with the arms 114a and 114b is adjusted accordingly.

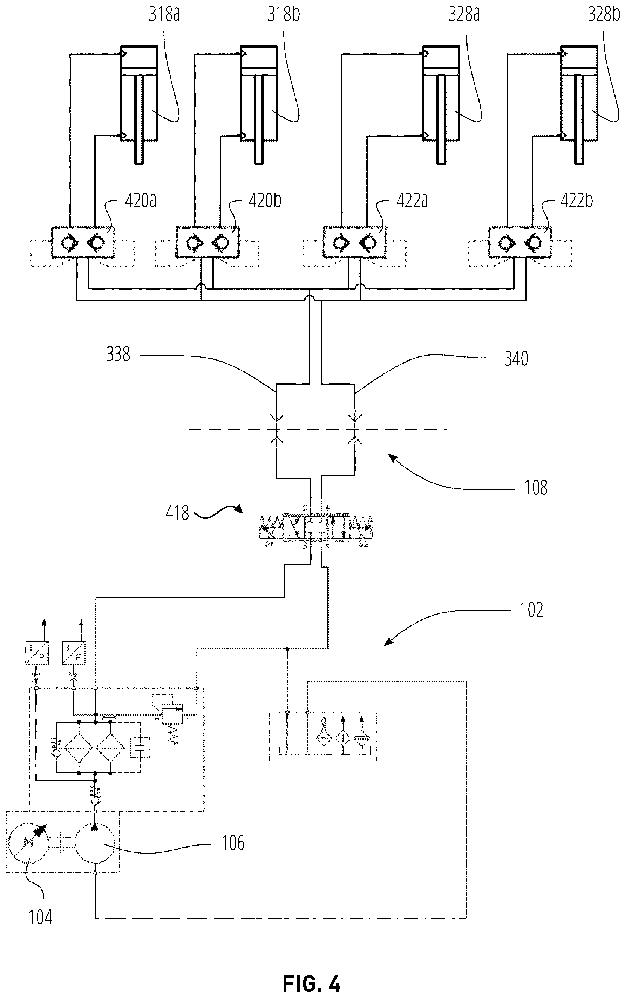

The actuators 318a, 318b and the at least one actuator 112a, 112b for adjusting the height of the at least one coupling point 314, 342 may be hydraulic cylinders or electro-mechanical drive units, for example. The at least one actuator 112a, 112b of the towing vehicle 100 is powered by a power source 102 of the towing vehicle 100. But also the actuators 318a and 318b and the actuators 328a and 328b of the towable vehicle 300 can be powered by power source 102 of the towing vehicle 100 as shown in more detail in FIG. 4.

As can be seen in FIG. 4, the power source 102 is exemplarily designed as a hydraulic power source comprising a hydraulic pump 106 driven by a motor 104 of the towing vehicle 100, e. g. a prime mover of the towing vehicle 100. The pump 106 pumps a hydraulic fluid from a tank to a connector interface 108. The connector interface 108 is located at a rear side of the towing vehicle 100 as can be seen in FIG. 5A to FIG. 5C. The connector interface 108 may comprise one or more hydraulic ports to connect the towable vehicle 300 with the connector interface 108 by means of hydraulic lines 338, 340. A valve 418 is arranged between the pump 106 and the connector interface 108 to control the flow of the hydraulic fluid provided at the connector interface 108. The valve 418 may be a 4/3 directional valve controlled by the control unit 20. The actuators 318a, 318b for adjusting the drawbar 312 and the actuators 328a, 328b for controlling the locking elements 324a, 324b of the swing locking mechanism 320 are exemplarily designed as hydraulic cylinders each having an axially movable plunger. The actuators 318a, 318b, 328a and 328b are connected with the connector interface 108 by hydraulic lines to be supplied with the hydraulic fluid provided by the pump 106. By controlling the position of the valve 418, the control unit 20 controls the flow of the hydraulic fluid to adjust the position of the plungers of the actuators 318a, 318b, 328a and 328b.

The actuators 318a, 318b for adjusting the drawbar 312 are connected contrarily to the actuators 328a, 328b for controlling the locking elements 324a, 324b with the connector interface 108 so that the actuators 318a, 318b and the actuators 328a, 328b are actuated in an antagonistic manner. I. e., input ports of the actuators 318a, 318b for adjusting the drawbar 312 are connected with output ports of the actuators 328a, 328b for controlling the locking elements 324a, 324b and vice versa. As a result, when the plungers of the actuators 318a, 318b for adjusting the drawbar 312 move into the cylinders, the plungers of the actuators 328a, 328b for controlling the locking elements 324a, 324b move out of the cylinders and vice versa. Thus, the swing locking mechanism 320 is simultaneously activated by the actuators 328a, 328b when the drawbar 312 is moved by the actuators 318a, 318b to lift the front axle 304 and vice versa.

Each of the actuators 318a, 318b, 328a and 328b is connected with a corresponding double check valve 420a, 420b, 422a and 422b. The double check valves 420a, 420b, 422a and 422b prevent a movement of the plungers of the corresponding hydraulic cylinders by blocking a fluid flow if pressure in the line 338 or 340 is insufficient, as for example in case of a pressure drop, to ensure that the corresponding plungers maintain their axial positions in the hydraulic cylinders. Thus, the position of the drawbar 312 actuated by the actuators 318a, 318b and the positions of the locking elements 324a, 324b of the swing locking mechanism 320 actuated by the actuators 328a, 328b will be upheld in case of a pressure drop, too. But if pressure in the line 338 or 340 is sufficient, the double check valves 420a, 420b, 422a and 422b allow a fluid flow so that the axial position of the plungers can be adjusted accordingly.

Alternatively, the power source 102 can be a generator and/or battery to provide electric power by means of wires to the connector interface 108 to supply electric actuators 318a, 318b, 328a and 328b. In this case, the valve 418 can be omitted. But also a hybrid solution is possible if the actuators 318a, 318b for adjusting the drawbar 312 are of one type, e. g. hydraulic type, and the actuators 328a, 328b for controlling the locking elements 324a, 324b are of another type, e. g. electric type.

Moreover, the connector interface 108 may also comprise a data interface so that the control unit 20 can also communicate with the towing vehicle 100 to send or receive signals.

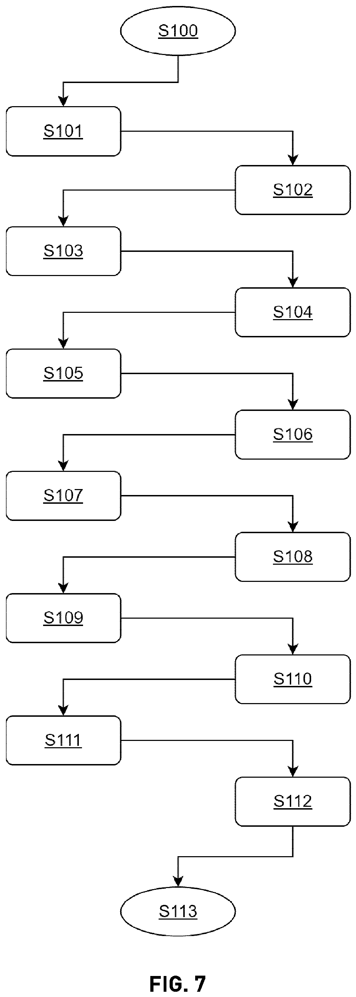

FIG. 7 shows a flow chart of a method for coupling the towable vehicle 300 with the towing vehicle 100. The method may be at least partly a computer-implemented method stored as a computer program product in the memory 80 of the control unit 20. The control unit 20 is configured to carry out the method. Computer-implemented parts of the method may be executed by the controller 60 of the control unit 20. Non-computer-implemented parts of the method may be executed manually or by other components of the system. The method is described by way of example of several steps without any restriction in respect of these steps. I. e. the number or the order of steps may be adapted, for example single steps may be excluded and/or added and executed earlier or later than described.

The method starts with step S100. An operator may plug electric and/or hydraulic lines to the connector interface 108 of the towing vehicle 100 to connect the towable vehicle 300 with the power source 102 of the towing vehicle 100 so that all actuators of the towable vehicle 300 can be supplied with energy. Optionally, additional equipment such as the control unit 20 and the sensor 344 is supplied by electric energy via the connector interface 108. The operator may press a button of a human machine interface of the towable vehicle 300 to start the method.

Then, the method proceeds to step S101 and the control unit 20 detects a connection of the power source 102 of the towing vehicle 100 with the towable vehicle 300, for example with the at least one actuator 318a, 318b for adjusting the height of the at least one coupling point 314, 342, with the actuator for extracting the at least one coupling point 314, 342 out of the drawbar 312 and/or with the actuators 328a, 328b for controlling the locking elements 324a, 324b.

The method proceeds to step S102 and the control unit 20 controls the actuator of the drawbar 312 to extract the at least one coupling point 314, 342 out of the drawbar 312 and to increase the length of the drawbar 312. Alternatively, an operator may manually pull out the at least one coupling point 314, 342 to extract the at least one coupling point 314, 342 to increase the length of the drawbar 312.

The method proceeds to step S103 and the control unit 20 controls the at least one actuator 318a, 318b to increase the height of the at least one coupling point 314, 342 of the drawbar 312 of the towable vehicle 300. The at least one actuator 318a, 318b rotates the drawbar 312 about the lateral axis 316 so that the end of the drawbar 312 with the at least one coupling point 314, 342 is raised and the other end is lowered as shown in FIG. 3A. The drawbar 312 is rotated until the complementary coupling of the towing vehicle 100 can be moved under the at least one coupling point 314, 342 without a collision. Alternatively, the operator may manually adjust the height of the at least one coupling point 314, 342 accordingly.

The method proceeds to step S104 and the towing vehicle 100 is positioned in respect of the towable vehicle 300 so that a connection between the at least one coupling point 314, 342 of the drawbar 312 and the complementary coupling of the towing vehicle 100 can be established when the at least one coupling point 314, 342 is lowered. In case of an autonomous vehicle, the towing vehicle 100 may be controlled by the control unit 20 of the towable vehicle 300 accordingly. For example, the control unit 20 sends control commands to the towing vehicle 100 to steer and to drive the towing vehicle 100 until a corresponding target position for coupling the at least one coupling point 314, 342 with the complementary coupling has been reached. Alternatively, the operator may move the towing vehicle 100 to the corresponding target position.

The method proceeds to step S105 and the control unit 20 controls the at least one actuator 318a, 318b to decrease the height of at least one coupling point 314, 342 of the drawbar 312 of the towable vehicle 300. The at least one actuator 318a, 318b rotates the drawbar 312 about the lateral axis 316 so that the end of the drawbar 312 with the at least one coupling point 314, 342 is lowered and the other end is raised as shown in FIG. 3B (in comparison with FIG. 3A).

The method proceeds to step S106 and the control unit 20 controls the at least one actuator 318a, 318b to rotate the drawbar 312 until the at least one coupling point 314, 342 gets connected with the complementary coupling of the towing vehicle 100. Alternatively, the operator may manually adjust the height of the at least one coupling point 314, 342 and connect the at least one coupling point 314, 342 with the complementary coupling accordingly. When the at least one coupling point 314, 342 has been connected with the complementary coupling, the vehicle combination 110 comprising the towable vehicle 300 and the towing vehicle 100 has been established.

The method proceeds to step S107 and the control unit 20 controls the at least one actuator 318a, 318b to continue rotating the drawbar 312 whereas the end with the at least one coupling point 314, 342 is abutted by the complementary coupling of the towing vehicle 100 so that the other end of the drawbar 312 is still raised. Thus, the drawbar 312 pushes the front axle 304 of the towable vehicle 300 in an upward direction and the front axle 304 of the towable vehicle 300 is lifted. The ground engaging means, here the wheels 306 and 308, of the front axle 304 are also lifted and get out of contact with the ground 330 as can be exemplarily seen in FIG. 6.

Since the ground engaging means of the rear axle 402 in terms of the wheels 404, 406 remain to stay in contact with the ground 330, the towable vehicle 300 will be inclined in response to the lifting of the front axle 304 (see FIG. 6). The method proceeds to step S108 and the control unit 20 receives a sensor signal from the sensor 344 detecting the lifting of the front axle 304. The sensor signal may represent the inclination of the towable vehicle 300. The control unit 20 may compare the sensor signal with a threshold to check that the front axle 304 has been lifted enough for drawing the towable vehicle 300.

The method proceeds to step S109 and the control unit 20 activates the swing locking mechanism 320. The swing locking mechanism 320 may be activated in response to the received sensor signal from the sensor 344 (step S108) or in response to the detection of the connection of the power source 102 with the towable vehicle 300 (step S101). The control unit 20 controls the actuators 328a, 328b to press the locking elements 324a and 324b against their abutments 326a and 326b to lock the swing locking mechanism 320 and to prevent swinging of the front axle 304 about the longitudinal axis 322. As mentioned above, the control unit 20 may control the actuators 318a, 318b for adjusting the drawbar 312 and the actuators 328a, 328b for controlling the locking elements 324a, 324b simultaneously in an antagonistic manner by means of the valve 418. If a swing movement of the front axle 304 can be prevented due to an appropriate connection between the drawbar 312 and the towing vehicle 100 such as connecting two coupling points 314, 342 of the drawbar 312 with the complementary coupling of the towing vehicle 100, step S109 may be skipped by the control unit 20.

The method proceeds to step S110 and the control unit 20 controls the steering system of the wheels 404 and 406 of the rear axle 402 to turn the wheels 404 and 406 to the neutral position for a straight forward driving direction. After the wheels 404 and 406 have been turned into the neutral position, the control unit 20 activates the steering locking mechanism 408 for locking a steering movement of the wheels 404 and 406. The control unit 20 may control the steering system and the steering locking mechanism 408 in response to the received sensor signal from the sensor 344 (step S108) or in response to the detection of the connection of the power source 102 with the towable vehicle 300 (step S101). Optionally, the control unit 20 may also turn the wheels 306 and 308 to the neutral position and activate the steering locking mechanism 336 for locking a steering movement thereof.

The method proceeds to step S111 and the control unit 20 controls the brake release mechanism 416 to cancel an activated parking brake function of the brakes (414) of the wheels 404 and 406 of the rear axle 402. The brake release mechanism 416 releases the brakes (414) to enable free rolling of the wheels 404 and 406 when the towable vehicle 300 is drawn. Since the parking braking function is cancelled only, the brakes (414) of the wheels 404 and 406 are still applicable by the control unit 20 for service braking function. The control unit 20 may control the brake release mechanism 416 in response to the received sensor signal from the sensor 344 (step S108) or in response to the detection of the connection of the power source 102 with the towable vehicle 300 (step S101). Alternatively, the parking braking function may be cancelled by a manual intervention of the operator. For example, the brake release mechanism 416 may be manually operable, e. g. by means of a screw accessible from the outside of the towable vehicle 300.

The method proceeds to step S112 and the control unit 20 activates the interrupting mechanism 412 to interrupt a transmission of drive torque between the wheels 404 and 406 of the rear axle 402 and the drive 410. For example, the control unit 20 may open a clutch arranged between the wheels 404 and 406 and the drive 410. The control unit 20 may control the interrupting mechanism 412 in response to the received sensor signal from the sensor 344 (step S108) or in response to the detection of the connection of the power source 102 with the towable vehicle 300 (step S101). Alternatively, the interrupting mechanism 412 may be activated by a manual intervention of the operator.

Then, the method proceeds to step S113 and ends. The method may be restarted again.

All references cited herein are incorporated herein in their entireties. If there is a conflict between definitions herein and in an incorporated reference, the definition herein shall control.

**LISTING OF DRAWING ELEMENTS**

| | | | |
|---|---|---|---|
| 100 | towing vehicle | 106 | pump |
| 102 | power source | 108 | connector interface |
| 104 | motor | 110 | vehicle combination |
| 112a | actuator | 326a | abutment |
| 112b | actuator | 326b | abutment |
| 114a | arm | 328a | actuator |
| 114b | arm | 328b | actuator |
| 20 | control unit | 330 | ground |
| 40 | I/O interface | 332 | unevenness |
| 60 | controller | 334 | drive |
| 80 | memory | 336 | steering locking mechanism |
| 300 | towable vehicle | 338 | line |
| 302 | frame | 340 | line |
| 304 | front axle | 342 | coupling point |
| 306 | wheel | 344 | sensor |
| 308 | wheel | 402 | rear axle |
| 310 | towing assembly | 404 | wheel |
| 312 | drawbar | 406 | wheel |
| 314 | coupling point | 408 | steering locking mechanism |
| 316 | axis | 410 | drive |
| 318a | actuator | 412 | interrupting mechanism |
| 318b | actuator | 414 | brake |
| 320 | swing locking mechanism | 416 | brake release mechanism |
| 322 | axis | 418 | valve |
| 324a | locking element | 420 | double check valve |
| 324b | locking element | | |

## Claims

1. A towable vehicle (300) configured to be towed by a towing vehicle (100) comprising
a rear axle (402);
a front axle (304);
a towing assembly (310) configured
for connecting the towing vehicle (100) and
for lifting the front axle (304),
the towing assembly (310) comprising
a drawbar (312) with at least one coupling point (314, 342); wherein
the height of the at least one coupling point (314, 342) is adjustable by a first actuator (318a, 318b) and/or a second actuator (112a, 112b).

2. The towable vehicle (300) of claim 1, wherein
the drawbar (312) is pivotably connected with the front axle (304).

3. The towable vehicle (300) of claim 1 or 2, wherein
the towing assembly (310) comprises the first actuator (318a); and
the first actuator (318a) is connected with the drawbar (312).

4. A towable vehicle (300) of any one of the preceding claims, wherein
the first actuator (318a) is configured to be powered by a power source (102) of the towing vehicle (100).

5. The towable vehicle (300) of any one of the preceding claims, wherein
the at least one coupling point (314, 342) is extractable.

6. The towable vehicle (300) of any one of the preceding claims, comprising
a swing locking mechanism (320); wherein
the front axle (304) is a swing axle; and
the swing locking mechanism (320) is configured to lock a swing movement of the front axle (304).

7. The towable vehicle (300) of claim 6, wherein
the swing locking mechanism (320) comprises a third actuator (328a, 328b) for locking or unlocking a swing movement of the front axle (304).

8. The towable vehicle (300) of any one of the preceding claims, comprising wheels (404, 406) connected with the rear axle (402);
a drive (410) for transferring a drive torque to the wheels (404, 406); and
an interrupting mechanism (412) to interrupt a transmission of the drive torque to the wheels (404, 406).

9. The towable vehicle (300) of any one of the preceding claims, comprising steerable wheels (404, 406) connected with the rear axle (402); and
a steering locking mechanism (408) for locking a steering movement of the steerable wheels (404, 406).

10. The towable vehicle (300) of any one of the preceding claims, comprising
a brake (414) for braking a wheel (404, 406) of the rear axle (402); and
a brake release mechanism (416) for disabling a brake actuation of the brake (414).

11. The towable vehicle (300) of claim 10, wherein
the brake (414) is applicable for a service brake function and a parking brake function; and
the brake release mechanism (416) is configured for disabling the brake actuation of the brake (414) when the brake (414) is applied for the parking brake function and enabling an actuation of the brake (414) when the brake (414) is applied for the service brake function.

12. The towable vehicle (300) of any one of the preceding claims, comprising a sensor (344) for detecting a lifting of the front axle (304).

13. A vehicle combination (110) of a towable vehicle (300) of any one of the preceding claims and a towing vehicle (100) wherein
the towing vehicle (100) comprises
at least one height adjustable arm (114a, 114b);
wherein
the second actuator (112a, 112b) is attached to the at least one height adjustable arm (114a, 114b) and
the at least one coupling point (314, 342) is attached to the at least one height adjustable arm (114a, 114b).

14. A method of coupling a towable vehicle (300) with a towing vehicle (100), the method comprising:
Positioning of the towing vehicle (100) in respect of the towable vehicle (300);
increasing the height of at least one coupling point (314, 342) of a drawbar (312) of the towable vehicle (300);
connecting the at least one coupling point (314, 342) with the towing vehicle (100);
decreasing the height of the at least one coupling point (314, 342); and
lifting a front axle (304) of the towable vehicle (300).

15. The method of claim 14, comprising at least one of:
Extracting the at least one coupling point (314, 342);
activating a swing locking mechanism (320) to lock a swing movement of the front axle (304) of the towable vehicle (300);
turning steerable wheels (404, 406) of a rear axle (402) of the towable vehicle (300) into a neutral position and activating a steering locking mechanism (408) for locking a steering movement of the steerable wheels (404, 406);
activating an interrupting mechanism (412) to interrupt a transmission of drive torque to the wheels (404, 406) of the rear axle (402) of the towable vehicle (300); and/or
releasing a brake (414) configured for braking a wheel (404, 406) of the rear axle (402) of the towable vehicle (300);
connecting a power source (102) of the towing vehicle (100) with an actuator (318a, 318b) for adjusting the height of the at least one coupling point (314, 342).
sensing a lifting of a front axle (304) of the towable vehicle (300).
